# EUROPEAN PATENT SPECIFICATION

(11) **EP 3 827 254 B1**
(45) Date of publication and mention of the grant of the patent: **08.10.2025**
(21) Application number: 19761731.9
(22) Date of filing: 07.08.2019
(51) Int. Cl.: G01N 27/90, G01M 13/04, G01N 27/904, G01N 27/9013

(54) **METHOD FOR DETECTING SURFACE BREAKING DEFECTS IN THE HARDENED SURFACE OF A BEARING COMPONENT, ESPECIALLY OF A BEARING OF A WIND TURBINE**
VERFAHREN ZUR ERKENNUNG VON OBERFLÄCHENBRUCHFEHLERN IN DER GEHÄRTETEN OBERFLÄCHE EINER LAGERKOMPONENTE, INSBESONDERE EINES LAGERS EINER WINDKRAFTTURBINE
PROCÉDÉ DE DÉTECTION DE DÉFAUTS DE RUPTURE DE SURFACE SUR LA SURFACE DURCIE D'UN COMPOSANT DE PALIER, EN PARTICULIER D'UN PALIER D'UNE ÉOLIENNE

(30) Priority: 29.08.2018 EP 18191408
(43) Date of publication of application: 02.06.2021
(73) Proprietor: Siemens Gamesa Renewable Energy A/S, 7330 Brande (DK)
(72) Inventor: ELMOSE, Soeren Forbech, 7441 Bording (DK); PEDERSEN, Björn, 6823 Ansager (DK)
(74) Representative: SGRE-Association
(86) International application number: PCT/EP2019/071160
(87) International publication number: WO 2020/043447

(56) References cited:
- EP-A2- 1 153 289
- EP-B1- 1 153 289
- WO-A1-2013/190504
- US-A1- 2009 091 318
- US-A1- 2014 347 043
- "AUTOMATED BALL PATH AND GEAR TOOTH INSPECTION SYSTEM FOR LARGE SLEWING BEARINGS", IP.COM JOURNAL, IP.COM INC., WEST HENRIETTA, NY, US, 22 April 2013 (2013-04-22), XP013156868, ISSN: 1533-0001

## Description

The invention relates to a method for detecting surface breaking defects in the hardened surface of a bearing component, especially of a bearing of a wind turbine.

Bearings are used in many various applications for connecting two machine parts which are rotatable relative to each other. Especially in large applications like a wind turbine respectively large bearings are used, with bearing rings having a diameter of one or several meters.

The surface of such a bearing respectively a bearing ring, especially in large applications, is hardened. Usually an induction hardening method is used for hardening the surface at least in its upper surface layer. In most appliances especially the contact surfaces, on which the rolling elements are rolling, is processed this way, as this surface of the respective ring is highly stressed and loaded.

Due to the high stress and loads resting on the running surfaces, these surfaces are subjected to wear. In the long run the loaded surface may show small fissures or cracks, which negatively influence the mechanical properties of the rolling surface. The cracks are very small at the beginning, having a very small width and depth (less than 1 mm and a comparable short length of approx. 1 mm), but can become larger with time.

It is therefore necessary to try to detect these fissures or breaking defects in the surface, either during the manufacturing process or for evaluating if the bearing or the bearing component needs to be maintenanced or changed. This is primarily being done using a magnetic particle inspection (MPI). For this inspection, which is a non-destructive testing method for detecting surface discontinuities in ferromagnetic materials, a magnetic field is put into the part by magnetizing the part directly or indirectly. Due to the magnetization magnetic lines of force are perpendicular to the direction of the electric current. In the presence of a surface discontinuity the magnetic flux leaks, a local inhomogenity is given. To identify such a discontinuity or such a leak in the magnetic flux, various particles are applied to the surface either in a dry state or in a wet suspension. The various particles are attracted to an area of flux leakage and form a visible indication. This magnetic particle inspection is certainly helpful to localize any surface discontinuities, but is a very complex and longstanding process.

Other methods for monitoring or detecting surface breaking defects are known from the documents US 2014/347043 A1, WO 2013/190504 A1, US 2009/091318 A1, and EP 1 153 289 A2. The WO 2013/190504 A1 patent describes the use of eddy current probes for inspecting tubing comprising an array of coils arranged in rows that are offset with respect to each other and in which the individual coils operate in transmit-receive mode.

It is therefore an object of the invention to provide an improved method for detecting surface breaking defects.

For solving the problem the invention refers to a method for detecting surface breaking defects in the hardened surface of a bearing component, especially of a bearing of a wind turbine, which is characterized in that the surface is scanned with a detecting device comprising an array of coils with at least one coil being controlled as a transmitting coil generating a magnetic field inducing an eddy current in the surface and at least one coil being controlled as a receiving coil measuring a magnetic field generated by the eddy current and providing respective measurement signals, and a control device for processing the measurement signals.

According to the inventive method the detection of surface breaking defects or surface discontinuities resulting from fissures or gaps in the hardened surface of the bearing component is performed by an eddy current inspection. A detecting device is used for scanning the surface under investigation and for receiving and processing measurement signals from the surface, which signals are influenced by discontinuities or inhomogeneities in the surface under investigation, compared to areas with a homogeneous surface.

For scanning the surface the detecting device comprises an array of coils, with at least one coil being controlled as a transmitting coil generating a magnetic field inducing an eddy current in the surface. A control device is used for controlling a coil, which is then acting as a transmitting coil, for generating a magnetic field in the surrounding of the coil. This magnetic field interacts with the bearing component respectively the surface and the surface region, and induces an eddy current in the surface and subsurface region in the respective scanning area. This eddy current in turn generates a magnetic field, which interacts with a second coil, which is controlled as a receiving coil by the control device. The magnetic field generated by the eddy current induces a current and therefore a respective signal in the receiving or measuring coil. This signal is received by the control device and processed by the control device.

The received signal from a homogeneous area is different to a signal received from an area with a fissure or gap, which interferes the surface and subsurface region and therefore the eddy current and finally influences the magnetic field generated by the eddy current. This leads to a change in the signal received by the receiving coil, compared to the signal from a homogeneous region. By scanning the surface with a detecting device it is therefore possible to create a complete surface map showing the course of the received signal over the whole surface under investigation. Any discontinuity like a peak or the like in the signal map results from a surface defect and is a clear indication of a local inhomogeneity like a fissure or a gap or a crack.

Therefore, by using such a detecting device and scanning the whole surface of the bearing device a very fast and accurate inspection is possible, with a very precise local indication of any kind of inhomogeneity.

According to the invention, two adjacent coils are simultaneously controlled as transmitting coils and two coils adjacent to the transmitting coils are controlled as receiving coils. This allows the eddy current measurements to be simultaneously performed in two adjacent areas or respective different directions. The transmitting coils are arranged side by side in a respective row, while the two receiving coils are also arranged adjacent to the transmitting coils, but distanced from each other, so that each receiving coil receives a separate signal resulting from the eddy current from a separate region. This enhances the speed of detection.

According to a first alternative, the array of the detecting device comprises only one row of coils. According to a second alternative, the array comprises at least two rows of coils, with the rows being arranged offset to each other. In this second alternative the second row is offset at half of the distance of two adjacent coils of the first row, with the distance of the coils in a second row being the same as the distance of the coils in the first row. This for example allows measuring in two separate rows, either simultaneously or intermitted. It also is advantageous as the speed of the scanning process is advanced.

Depending on the setup of the array different methods of controlling of the respective coils are possible. According to a first alternative two adjacent coils in a row are controlled as transmitting coils and the two receiving coils are positioned at both sides of the two transmitting coils in the same row. In this case both the transmitting and the receiving coils are arranged in the same row. This method alternative is therefore relevant for both alternatives comprising only one coil row or comprising two coil rows. In case two coil rows are provided and the respective transmitting and receiving coils are arranged in a common row, the rows, as already mentioned, may be controlled intermittedly, so that a measurement is performed by the coils of a first row and, after receiving the measurement signals, another cycle is performed by controlling the respective coils of the second row etc.

In this embodiment of the used detecting device the transmitting coils are arranged side by side, and the one receiving coil is arranged to the left of the one receiving coil, while the other receiving coil is arranged to the right of the other transmitting coil. Therefore, all four coils used for the detection process are arranged side by side.

In another inventive embodiment two adjacent coils in a row are controlled as transmitting coils and the first receiving coil is adjacent to one of the transmitting coils in the same row and the second receiving coil is in the second row and is adjacent to and centered between the transmitting coils. In this embodiment only three coils are in the same row, while the fourth coil is in the neighboring row. The transmitting coils are again arranged side by side. The first receiving coil is for example arranged to the left of the left transmitting coil. The second receiving coil is arranged in the second row and is distanced from the first receiving coil. It is placed in the center or between the transmitting coil, due to the row offset. In this embodiment the first receiving coil receives a measurement signal based on the eddy current mainly induced by the neighboring transmitting coil. Therefore, a detection in a direction parallel to the row direction is possible. The second receiving coil receives a measurement signal which is based on the eddy currents induced by both transmitting coils, due to the offset of the second row to the first row both in the direction of the respective rows and in the direction perpendicular to that. This second receiving coil therefore receives a measurement signal which is based on the overlaying eddy currents induced by the transmitting coils. It is obvious that this arrangement allows a detection in a direction perpendicular to the respective row direction. Therefore, with this inventive embodiment, a simultaneous signal detection in a first direction perpendicular to the row direction and in a second direction perpendicular to the row direction is simultaneously possible. This is also very advantageous for either the speed of the scanning process or for the local resolution of the scanning process.

As mentioned above, the detecting device used for performing the inventive method may comprise one coil row or at least two coil rows offset to each other. When only one row comprising more than four coils is provided, the control device may control the respective coils in a way that from one control period to the next control period the transmitting and receiving coils shift within the row by one adjacent coil over the whole row and back or starting again at the same row end. As mentioned above, in this embodiment two center transmitting coils and two receiving coils arranged at the left and right side of the transmitting coils are used for the scanning process and are respectively controlled by the control device. When the scanning or detecting device comprises a row with more than four coils, for example ten, fifteen or twenty coils, the respective coils used for a scanning cycle or control period move along the row from one scanning cycle to the next or from one control period to the next. Therefore, a line scan for example over the width of a bearing ring can be easily performed by simply changing the control of the needed coils. If the control frequency is high several hundred scanning cycles or control periods per second can be performed, so that a high-speed scanning is possible. This also allows that the same location is scanned several times due to the very high scanning frequency, so that for each location more than one scanning result is given, which can be respectively processed by the control device in order to evaluate a very precise and well-founded signal map.

When the line scan has proceeded over the whole row length it is possible that the scanning direction is reversed back to the other row end. In an alternative it is possible to again start at the same row end and perform a second scan.

When two rows each comprising more than four coils are provided, from one control period to the next control period the transmitting and receiving coils shift from row to row and within the row by one adjacent coil over the whole row and back or starting again at the same row end. While in the previously discussed embodiment, the transmitting coils are always in the same row, in this embodiment the transmitting and receiving coils move from one row to the other from one scanning cycle to the next scanning cycle. In a first scanning cycle the transmitting coils are in the first row with one receiving coil being adjacent to one of the transmitting coils, while the other receiving coil is in the second row. In the second scanning cycle the transmitting coils are in the second row, with one receiving coil also being in the second row, but the other receiving coil being in the first row. So, the coils respectively the coil functions jump from row to row in a respective scanning cycle. Due to the offset and the fact, that the coil function also changes along the respective rows, the respective coil functions change in a zig-zag manner along the row direction. This embodiment allows for the measurement in respective perpendicular direction with a very high scanning speed and a very high local resolution, as the respective measurements change from scanning cycle to scanning cycle only for the half-gap distance between two adjacent coils due to the row offset.

Preferably, a detecting device is used with an array of coils which is at least as wide as the bearing component. This allows for performing a whole scan over the bearing component width without the need of relocating the scanning device. It is therefore only necessary to move the device along the inner or outer circumference of the respective bearing ring for measuring the whole signal map.

Preferably, the row is longer than the width of the component, while the control device is able to control only the coils which are needed for providing a whole line scan over the component width. This allows for the use of one detecting device for detecting various bearing components or bearing rings with varying widths.

When scanning an object position information is recorded for each measured signal. So each signal is clearly located in the line direction and the circumferential direction or moving direction of the detecting device along the object. This allows to create a complete signal map with a high local resolution regarding the scan surface.

The invention furthermore relates to a detecting device for use in a method as described above, comprising an array of coils arranged in at least one row in a control device adapted to control the coils according to the method as described above.

Furthermore, the inventive detecting device comprises two rows each comprising more than four coils with the rows being arranged offset to each other.

Further advantages and details of the invention become aware from the following description of preferred embodiments of the invention and the drawings. The drawings show:
- Fig. 1: A principle sketch of the detecting device and a bearing component,
- Fig. 2: a principle sketch of a first embodiment of a coil arrangement in a first inventive method in a first scanning cycle,
- Fig. 3: the arrangement of fig. 2 in a second scanning cycle,
- Fig. 4: the second embodiment of a coil arrangement comprising two rows offset to each other in a second inventive method in a first scanning cycle,
- Fig. 5: the arrangement of fig. 4 in a second scanning cycle,
- Fig. 6: the coil arrangement according to fig. 4 for explaining a third inventive method, with fig. 6 showing a first scanning cycle, and
- Fig. 7-9: the arrangement of fig. 6 in a second, third and fourth scanning cycle.

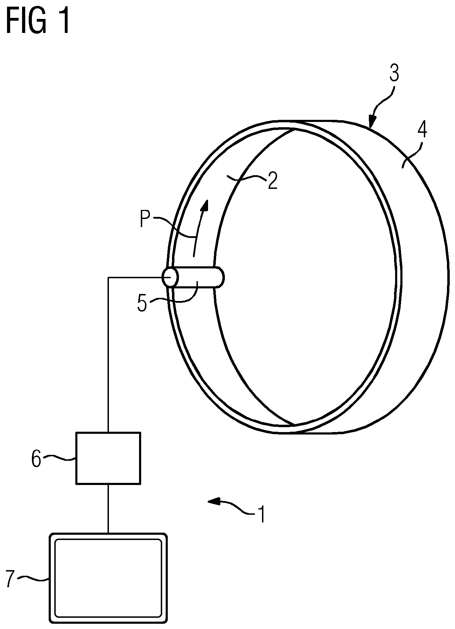

Fig. 1 shows an inventive detecting device 1 used for scanning a surface 2 of a bearing component 3, here for example an outer bearing ring 4, whose surface 2 is in use, for example in a wind turbine, loaded by the rolling elements rolling along the surface 2. The rolling elements are not shown in fig. 1.

The detecting device 1 comprises a coil housing 5 accommodating a respective number of coils, which are not shown in fig. 1, which coils are arranged in at least one row extending over the length of the housing 5, with the housing 5 being wider than the surface 2, so that the coil row is at least as long as the width of the surface 2 or preferably longer.

The device 1 furthermore comprises a control device 6 used for controlling the coil array respectively the respective coils for switching their function from a transmitting coil to a receiving coil as explained below.

The control device 6 furthermore comprises a respective controller being adapted to process the respective measurement signal received from the receiving coils of the coil array and for analyzing them for example in the form of a signal map displaying the respective localized measurement signals over the area of the surface 2. With this signal map any inhomogeneous spots like fissures or gaps or holes, which negatively influence the mechanical properties of the surface 2, can be detected. This finally processed information can be displayed at a display device 7, for example a monitor.

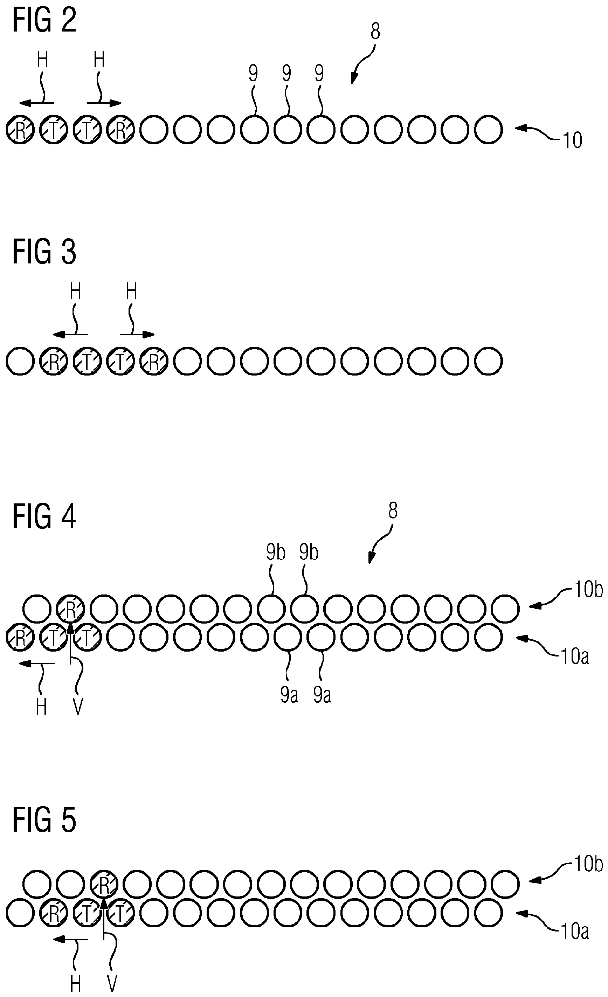

Figs. 2 to 9 show respective embodiments of the coil arrangement respectively the coil array of the detecting device 1 respectively the coil housing 5.

Fig. 2 shows a coil arrangement 8 comprising only one row of respective coils 9, with each row being separately controlled by the control device 6.

The coils 9 are controlled for performing a line scan along the row 10 for measuring respective measurement signals. The coil array 8 is used for performing an eddy current measurement, with the received measurement signals being influenced from the local surface properties of the area, where the eddy current, which induces the respective measurement signal in the receiving coil, flows. By scanning the surface line by line and along the surface length, for which the housing 5 is moved along the arrow P in fig. 1 with constantly monitoring the measurement position of each single measurement, the respective signal map can be created.

The control device 7 in this embodiment controls during one scanning cycle or control period four coils 9 in their function, the other coils 9 are not controlled and therefore do not participate during this scanning cycle.

Two coils 9 are controlled as transmitting coils T, which transmitting coils T are adjacent to each other. To the left and right of both transmitting coils T two receiving coils R, which receive the respective measurement signal, are respectively controlled by the control device 6. In the scanning cycle or control period as depicted in fig. 2 the current flows through the transmitting coils T, which generate a magnetic field which couples into the surface 2. This magnetic field induces eddy current in the surface 2. This eddy current again creates a magnetic field at the surface 2, which field interacts with or is measured by the receiving coils R, as a current is induced in these receiving coils, which creates the respective measurement signal, which is gathered by the control device 6.

As shown by the respective two arrows H the measurement direction is along the row 10, here in a horizontal direction.

When the respective first scanning cycle or control period has lapsed, the next scanning cycle or control period starts, which is shown in fig. 3. The control device 7 now changes the functionality of some of the coils 9. In fact, the functionality jumps or shifts to the right by one coil 9. Again, two transmitting coils are controlled by the control device 7, again being adjacent to each other, and two receiving coils R receiving the measurement signals are controlled by the control device 6. The measurement direction has not changed, as the arrows H indicate.

This scanning cycle provides measurement signals from other, offset locations along the row 10 and therefore along the surface 2.

After this scanning cycle, a next scanning cycle starts with shifting the four coil functionalities again for one coil etc. It is obvious that due to the shifting along the row 10 most of the locations are measured twice. In fact, due to the relatively high measurement frequency respectively extremely short scanning cycles and control periods, with several hundred measurement cycles or control periods per second being realized, a high number of measurement signals are received by the control device 6. Therefore, each location is scanned quite often, resulting in a very accurate local signal information and therefore inspection.

Fig. 4 shows another embodiment of a coil array 8 used in an inventive detection device 10. This coil array comprises two rows 10a and 10b, each comprising respective coils 9a and 9b. The rows 10a, 10b are obviously shifted in the row direction by one half coil gap, so that the coils 9b are centered between two coils 9a. The control device 6 again controls two coils 9 as transmitting coils T, which transmitting coils T are again adjacent to each other, see fig. 4. In this embodiment the transmitting coils T are arranged in the row 10a.

To the left of the left transmitting coil T a coil 9 is controlled as a receiving coil R, this is in this stage the coil 9 most left in the row. Due to this arrangement, comparable to figs. 2 and 3, the eddy current measurement is performed in the direction as shown by arrow H, i.e. the horizontal direction of the row 10a.

A second receiving coil R is controlled in the second row 10b. The second receiving coil R is spaced apart from the first receiving coil R and is centered between the two transmitting coils T. This receiving coil R measures the eddy current induced in the surface 2 of both transmitting coils T, as they are adjacent to each other and their respective magnetic fields overlap, therefore also the generated eddy current is the result of both transmitting coils T. It is obvious that the measuring direction indicated by the arrow V is perpendicular to the measuring direction H. Therefore, this embodiment allows for two different measuring directions, one horizontal and the other vertical, which is very advantageous for securing the defect detection indications in both directions.

Fig. 5 shows the second scanning cycle or control period. Again, the respective coils are shifted by one coil along the respective coils 10a, 10b. The control device 6 controls two transmitting coils T and two receiving coils R, one again being to the left of the two transmitting coils, but in the same row 10a, while the second receiving coil is in the second row 10b. The scanning proceeds along the lines with the high scanning frequency, so that again each location is scanned more than one time, also a fairly fast speed scan is realized.

As in the embodiment of figs. 2 and 3, also in the embodiment of figs. 4 and 5 the local resolution is very fine and determined by the gap or distance between the respective coils 9 in the respective rows 10 respectively 10a, 10b.

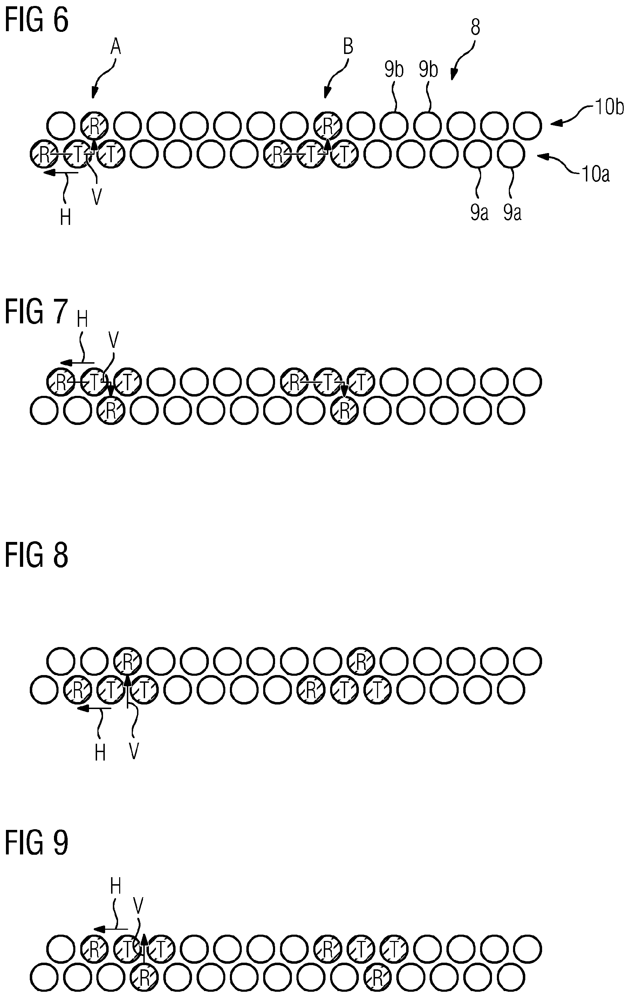

For further enhancing the local resolution, based on the coil array 8 as shown in fig. 4, a new inventive control method is realized, which is explained in the figs. 6 to 9.

Fig. 6 shows a coil array 8 again comprising two separate rows 10a, 10b, with the row 10b being offset for half of the gaps between the coils of row 10a. Each row comprises a bunch of coils 9a and 9b.

In this embodiment two coil clusters A and B are simultaneously controlled by the control device 6 in the coil array 8 with the coil clusters A, B being spaced apart from each other and arranged in a way, that, when the respective line scans are performed, each coil cluster A, B scans half of the respective array length.

Again, each cluster A, B comprises two transmitting coils T adjacent to each other, again controlled for example in row 10a. A first receiving coil R is controlled in the same row 10a left to the transmitting coils T, while a second receiving coil R is controlled in the row 10b, distanced to the first receiving coil R in row 10a, and centered between the transmitting coils T.

This is the setup for both coil clusters A, B and the setup for the first scanning cycle or control period, as shown in fig. 6.

Fig. 7 shows the second scanning cycle or control period. The control device 6 now controls the respective coils 9a, 9b and therefore the respective coil function in a different way compared to figs. 5 and 6. In this second cycle or period the two transmitting coils T are now in the second row 10a, but shifted in the line direction for the half gap length between two coils. Also, the first receiving coil R as now shifted to the second row 10b, but is still to the left of the two transmitting coils T. The second receiving coil R has now shifted to the first row 10a and for a half gap width to the right, but is still centered between the two transmitting coils.

It is obvious, that the functionality of the respective coils of the respective clusters A, B has not only changed in the row direction, but also in the vertical direction from row to row. This also has an influence on the direction of measurement and the local resolution. As shown in fig. 7, the direction in the horizontal direction indicated by the arrow H, is still the same, but the direction in the vertical direction indicated by the arrow V, has changed, as the transmitting coils T are now in the second row 10b and the respective receiving coil R is in the first row 10a. Furthermore, the scanning location has also only shifted for a half gap regarding the vertical scanning direction V, and a half gap and the vertical row distance regarding the horizontal scanning direction H. It is obvious that by this respective control method the local resolution can be further enhanced.

Fig, 8 shows the third scanning cycle or control period. Again, the functionality of the respective coils changes, in this scanning cycle the two transmitting coils T are again in the first row 10a together with the first receiving coil R, while the second receiving coil R is again in the second row 10b. The setup is comparable to fig. 6, but shifted in both rows 10a, 10b by one coil. But referred to the previous second scanning cycle again there is a change in the vertical scanning direction V and a local shift of the scanning position in the row direction only for a half gap width and in the horizontal direction for a half gap width and the row distance. The same setup is again given for both clusters A and B. Compared to the embodiment of figs. 4 and 5 due to the switching of the functionality between the rows 10a, 10b, more measurement signals are received during the scan without any relevant influence regarding the measurement or scanning speed due to the relatively high frequency of several hundred measurement or scanning cycles per second.

Fig. 9 finally shows the forth scanning cycle or control period. Again, the functionality switches between the rows 10a, 10b, the two transmitting coils T and the one receiving coil R are now again in the second row 10a, compared to fig. 7, while the second receiving coil R is in the first row 10a. Again, the respective half shift is given, with the enhanced local resolution.

The respective changes and scanning cycles are performed until each cluster A, B has scanned half of the length of the respective rows 10a, 10b, the line scan is then done.

After the line scan has finished, there are two different ways to proceed, which is relevant for all embodiments of the figs. 2 to 9. The next line scan can start directly at the end of the finished line scan, with the coil array being moved along the surface 2 in the next scanning position. This second line scan may now be performed backwards or in the reverse direction as the previous line scan. In an alternative it is possible to again start this second line scan at the same starting position of the respective coil functionalities as in the previous line scan, so that each line is scanned in the same scanning direction.

The eddy current inspection together with the inventive detecting device allows for a very accurate and precise scanning with a high resolution of the respective surface 2 and therefore a very accurate detection of any kind of surface defects, especially in the form of fissures, gaps or little holes, even if these defects are very small. Fissures or gaps or breaks with a width and depth of less than 1 mm and the length of approximately 1 mm or even less can be detected based on the measurement signals, so that a very precise wear detection is possible and any relevant wear can be recognized at a very early stage.

Although the present invention has been described in detail with reference to the preferred embodiment, the present invention is not limited by the disclosed examples from which the skilled person is able to derive other variations without departing from the scope of the invention, as defined by the appended claims.

## Claims

1. Method for detecting surface breaking defects in the hardened surface of a bearing component (2), especially of a bearing of a wind turbine, wherein the surface (2) is scanned with a detecting device (1) comprising an array (8) of coils (9, 9a, 9b) with at least one coil (9, 9a, 9b) being controlled as a transmitting coil (T) generating a magnetic field inducing an eddy current in the surface (2) and at least one coil (9, 9a, 9b) being controlled as a receiving coil (R) measuring a magnetic field generated by the eddy current and providing respective measurement signals, and a control device (6) for processing the measurement signals,
wherein two adjacent coils (9, 9a, 9b) are simultaneously controlled as transmitting coils (T) and wherein two coils (9, 9a, 9b) adjacent to the transmitting coils (T) are controlled as receiving coils (R),
wherein the array (8) comprises one row (10) of coils (9), or wherein the array (8) comprises at least two rows (10a, 10b) of coils (9a, 9b), with the rows (10a, 10b) being arranged offset to each other,
wherein either two adjacent coils (9a, 9b) in a row (10a, 10b) are controlled as transmitting coils (T) and the two receiving coils (R) are positioned at both sides of the two transmitting coils (T) in the same row (10a, 10b), or wherein two adjacent coils (9, 9a, 9b) in a row (10, 10a, 10b) are controlled as transmitting coils (T) and a first receiving coil (R) is adjacent to one of the transmitting coils (T) in the same row (10, 10a, 10b) and a second receiving coil (R) is in the second row (10, 10a, 10b) and is adjacent to and centered between the transmitting coils (T).

2. Method according to claim 1, **characterized in that**, when only one row (10) comprising more than four coils (9) is provided, from one control period to the next control period the transmitting and receiving coils (T, R) shift within the row (10) by one adjacent coil (9) over the whole row (10) and back or starting again at the same row end.

3. Method according to claim 1, **characterized in that**, when two rows (10a, 10b) each comprising more than four coils (9a, 9b) are provided, from one control period to the next control period the transmitting and receiving coils (T, R) shift within the respective row (10a, 10b) by one adjacent coil (9a, 9b) over the whole row (10a, 10b) and back or starting again at the same row end.

4. Method according to claim 1, **characterized in that**, when two rows (10a, 10b) each comprising more than four coils (9a, 9b) are provided, from one control period to the next control period the transmitting and receiving coils (T, R) shift form row (10a, 10b) to row (10a, 10b) and within the row (10a, 10b) by one adjacent coil (9a, 9b) over the whole row (10a, 10b) and back or starting again at the same row end.

5. Method according to one of the preceding claims, **characterized in that**, when each row (10, 10a, 10b) comprises more than four coils (9, 9a, 9b), at least two clusters (A, B) of coils (9, 9a, 9b), each comprising two transmitting coils (T) and two receiving coils (R), are simultaneously controlled within the one or two rows (10a, 10a, 10b) but spaced apart along the length of the row(s) (10, 10a, 10b).

6. Method according to one of the preceding claims, **characterized in that** a detecting device (1) with an array (8) of coils which is at least as wide as the surface (2) of the bearing component (3) is used.

7. Detecting device for use in a method according to one of the preceding claims, comprising an array (8) of coils (9, 9a, 9b) arranged in at least one row (10, 10a, 10b) and a control device (6) adapted to control the coils (9, 9a, 9b), wherein said detecting device comprises two rows (10a, 10b) each comprising more than four coils (9a, 9b), with the rows (10a, 10b) being arranged offset to each other, **characterized in that** the control device (6) is adapted to control the coils according to the method of one of the preceding claims.

## Patentansprüche

1. Verfahren zum Erkennen von Oberflächenbruchfehlern in der gehärteten Oberfläche eines Lagerbauteils (2), insbesondere eines Lagers einer Windenergieanlage, wobei die Oberfläche (2) mit einer Erkennungsvorrichtung (1) abgetastet wird, die umfasst: ein Array (8) von Spulen (9, 9a, 9b), wobei mindestens eine Spule (9, 9a, 9b) als eine Sendespule (T) gesteuert wird, die ein Magnetfeld erzeugt, das einen Wirbelstrom in der Oberfläche (2) induziert, und wobei mindestens eine Spule (9, 9a, 9b) als eine Empfangsspule (R) gesteuert wird, die ein Magnetfeld misst, das durch den Wirbelstrom erzeugt wird, und entsprechende Messsignale bereitstellt; und eine Steuervorrichtung (6) zum Verarbeiten der Messsignale,
wobei zwei benachbarte Spulen (9, 9a, 9b) gleichzeitig als Sendespulen (T) gesteuert werden und
wobei zwei Spulen (9, 9a, 9b), die benachbart zu den Sendespulen (T) sind, als Empfangsspulen (R) gesteuert werden,
wobei das Array (8) eine Reihe (10) von Spulen (9) umfasst oder wobei das Array (8) mindestens zwei Reihen (10a, 10b) von Spulen (9a, 9b) umfasst, wobei die Reihen (10a, 10b) zueinander versetzt angeordnet sind,
wobei entweder zwei benachbarte Spulen (9a, 9b) in einer Reihe (10a, 10b) als Sendespulen (T) gesteuert werden und die zwei Empfangsspulen (R) an beiden Seiten der zwei Sendespulen (T) in der gleichen Reihe (10a, 10b) positioniert sind, oder wobei zwei benachbarte Spulen (9, 9a, 9b) in einer Reihe (10, 10a, 10b) als Sendespulen (T) gesteuert werden und eine erste Empfangsspule (R) sich in der gleichen Reihe (10, 10a, 10b) benachbart zu einer der Sendespulen (T) befindet und eine zweite Empfangsspule (R) sich in der zweiten Reihe (10, 10a, 10b) benachbart zu den Sendespulen (T) befindet und zwischen diesen zentriert ist.

2. Verfahren nach Anspruch 1, **dadurch gekennzeichnet, dass**, wenn nur eine Reihe (10), die mehr als vier Spulen (9) umfasst, bereitgestellt wird, die Sende- und Empfangsspulen (T, **R)** von einer Steuerperiode zur nächsten Steuerperiode innerhalb der Reihe (10) um eine benachbarte Spule (9) über die gesamte Reihe (10) und zurück verschoben werden oder erneut am gleichen Reihenende beginnend verschoben werden.

3. Verfahren nach Anspruch 1, **dadurch gekennzeichnet, dass** wenn zwei Reihen (10a, 10b), die jeweils mehr als vier Spulen (9a, 9b) umfassen, bereitgestellt werden, die Sende- und Empfangsspulen (T, R) von einer Steuerperiode zur nächsten Steuerperiode innerhalb der jeweiligen Reihe (10a, 10b) um eine benachbarte Spule (9a, 9b) über die gesamte Reihe (10a, 10b) und zurück verschoben werden oder erneut am gleichen Reihenende beginnend verschoben werden.

4. Verfahren nach Anspruch 1, **dadurch gekennzeichnet, dass** wenn zwei Reihen (10a, 10b), die jeweils mehr als vier Spulen (9a, 9b) umfassen, bereitgestellt werden, die Sende- und Empfangsspulen (T, R) von einer Steuerperiode zur nächsten Steuerperiode von Reihe (10a, 10b) zu Reihe (10a, 10b) und innerhalb der Reihe (10a, 10b) um eine benachbarte Spule (9a, 9b) über die ganze Reihe (10a, 10b) und zurück verschoben werden oder erneut am gleichen Reihenende beginnend verschoben werden.

5. Verfahren nach einem der vorhergehenden Ansprüche, **dadurch gekennzeichnet, dass**, wenn jede Reihe (10, 10a, 10b) mehr als vier Spulen (9, 9a, 9b) umfasst, mindestens zwei Cluster (A, B) von Spulen (9, 9a, 9b), die jeweils zwei Sendespulen (T) und zwei Empfangsspulen (R) umfassen, gleichzeitig innerhalb der einen oder den zwei Reihen (10a, 10a, 10b) gesteuert werden, jedoch entlang der Länge der Reihe(n) (10, 10a, 10b) voneinander beabstandet sind.

6. Verfahren nach einem der vorhergehenden Ansprüche, **dadurch gekennzeichnet, dass** eine Erkennungsvorrichtung (1) mit einem Array (8) von Spulen verwendet wird, das mindestens so breit wie die Oberfläche (2) des Lagerbauteils (3) ist.

7. Erkennungsvorrichtung für eine Verwendung in einem Verfahren nach einem der vorhergehenden Ansprüche, die ein Array (8) von Spulen (9, 9a, 9b), die in mindestens einer Reihe (10, 10a, 10b) angeordnet sind, und eine Steuervorrichtung (6) umfasst, die geeignet ist zum Steuern der Spulen (9, 9a, 9b), wobei die Erkennungsvorrichtung zwei Reihen (10a, 10b) umfasst, die jeweils mehr als vier Spulen (9a, 9b) umfassen, wobei die Reihen (10a, 10b) versetzt zueinander angeordnet sind, **dadurch gekennzeichnet, dass** die Steuervorrichtung (6) geeignet ist zum Steuern der Spulen gemäß dem Verfahren nach einem der vorhergehenden Ansprüche.

## Revendications

1. Procédé de détection de défauts de rupture de surface sur la surface durcie d'un composant de palier (2), en particulier d'un palier d'une éolienne, dans lequel la surface (2) est balayée avec un dispositif de détection (1) comprenant un réseau (8) de bobines (9, 9a, 9b) avec au moins une bobine (9, 9a, 9b) commandée comme bobine de transmission (T) générant un champ magnétique induisant un courant de Foucault dans la surface (2), et au moins une bobine (9, 9a, 9b) commandée comme bobine de réception (R) mesurant un champ magnétique généré par le courant de Foucault et fournissant des signaux de mesure respectifs, et un dispositif de commande (6) pour traiter les signaux de mesure,
dans lequel deux bobines adjacentes (9, 9a, 9b) sont commandées simultanément comme bobines de transmission (T) et
dans lequel deux bobines (9, 9a, 9b) adjacentes aux bobines de transmission (T) sont commandées comme bobines de réception (R),
dans lequel le réseau (8) comprend une rangée (10) de bobines (9), ou dans lequel le réseau (8) comprend au moins deux rangées (10a, 10b) de bobines (9a, 9b), les rangées (10a, 10b) étant décalées l'une par rapport à l'autre,
dans lequel soit deux bobines adjacentes (9a, 9b) dans une rangée (10a, 10b) sont commandées comme bobines de transmission (T) et les deux bobines de réception (R) sont positionnées de part et d'autre des deux bobines de transmission (T) dans la même rangée (10a, 10b), soit dans lequel deux bobines adjacentes (9, 9a, 9b) dans une rangée (10, 10a, 10b) sont commandées comme bobines de transmission (T) et une première bobine de réception (R) est adjacente à l'une des bobines de transmission (T) dans la même rangée (10, 10a, 10b) et une seconde bobine de réception (R) est dans la seconde rangée (10, 10a, 10b) et est adjacente aux bobines de transmission (T) et centrée entre celles-ci.

2. Procédé selon la revendication 1, **caractérisé en ce que**, lorsqu'une seule rangée (10) comprenant plus de quatre bobines (9) est prévue, d'une période de commande à la période de commande suivante, les bobines de transmission et de réception (T, R) se déplacent au sein de la rangée (10) d'une bobine adjacente (9) sur toute la rangée (10) et reviennent ou recommencent à la même extrémité de rangée.

3. Procédé selon la revendication 1, **caractérisé en ce que**, lorsque deux rangées (10a, 10b) comprenant chacune plus de quatre bobines (9a, 9b) sont prévues, d'une période de commande à la période de commande suivante, les bobines de transmission et de réception (T, R) se déplacent au sein de la rangée (10a, 10b) respective d'une bobine adjacente (9a, 9b) sur toute la rangée (10a, 10b) et reviennent ou recommencent à la même extrémité de rangée.

4. Procédé selon la revendication 1, **caractérisé en ce que**, lorsque deux rangées (10a, 10b) comprenant chacune plus de quatre bobines (9a, 9b) sont prévues, d'une période de commande à la période de commande suivante, les bobines de transmission et de réception (T, R) se déplacent d'une rangée (10a, 10b) à une rangée (10a, 10b) et au sein de la rangée (10a, 10b), d'une bobine adjacente (9a, 9b) sur toute la rangée (10a, 10b) et reviennent ou recommencent à la même extrémité de rangée.

5. Procédé selon l'une des revendications précédentes, **caractérisé en ce que**, lorsque chaque rangée (10, 10a, 10b) comprend plus de quatre bobines (9, 9a, 9b), au moins deux groupes (A, B) de bobines (9, 9a, 9b), comprenant chacun deux bobines de transmission (T) et deux bobines de réception (R), sont commandés simultanément au sein de la ou des deux rangées (10a, 10a, 10b), mais espacées sur la longueur de la ou des rangée(s) (10, 10a, 10b).

6. Procédé selon l'une des revendications précédentes, **caractérisé en ce qu'**un dispositif de détection (1), avec un réseau (8) de bobines qui est au moins aussi large que la surface (2) du composant de palier (3), est utilisé.

7. Dispositif de détection pour une utilisation dans un procédé selon l'une des revendications précédentes, comprenant un réseau (8) de bobines (9, 9a, 9b) agencées dans au moins une rangée (10, 10a, 10b) et un dispositif de commande (6) adapté pour commander les bobines (9, 9a, 9b), dans lequel ledit dispositif de détection comprend deux rangées (10a, 10b) comprenant chacune plus de quatre bobines (9a, 9b), les rangées (10a, 10b) étant agencées en décalage l'une par rapport à l'autre, **caractérisé en ce que** le dispositif de commande (6) est adapté pour commander les bobines selon le procédé de l'une des revendications précédentes.
